# EUROPEAN PATENT APPLICATION

(11) **EP 1 703 385 A2**
(43) Date of publication of application: **20.09.2006**
(21) Application number: 05254852.6
(22) Date of filing: 03.08.2005
(51) Int. Cl.: G06F 9/445

(54) **Operating system switchover method**

(30) Priority: 18.03.2005 JP 2005079629
(71) Applicant: FUJITSU LIMITED, Kawasaki-shi, Kanagawa 211-8588 (JP)
(72) Inventor: Kondo, Hisaki, c/o Fujitsu Limited, Kawasaki-shi, Kanagawa 211-8588 (JP)
(74) Representative: Wilding, Frances Ward

(57) **Abstract**

The invention allows easy actualization of starting up an operating system (OS) at an operating time in an information processing device (1) capable of exclusively operating a plurality of OSs, even in the case of switchover to the other OS after the OS has set this operating time. On the occasion of execution by a startup timer unit (21) stored with operating time set by a first or second operating system and causing the first operating system to transit from a stopping status to an operating status at the operating time, the operating time is read and temporarily stored (12) before an operation of the second operating system, and, after temporarily storing the operating time, the temporarily-stored operating time is written back to the startup timer unit (21) before the operation of the first operating system.

## Description

### BACKGROUND OF THE INVENTION

The invention relates to a technology of exclusively employing a plurality of operating systems (OSs).

In the OS installed into a personal computer (PC) in recent years, the system can be automatically restored to an ON-status from a power-saving status called an OFF-status, a halt-status, a standby-status, etc. by setting a timer, and can perform an operation set beforehand by a user.

For example, in the PC having a built-in TV tuner, a timer-based telerecording reservation is conducted, and, if the system in this state is kept in the power-saving status, the system is restored to the ON-status at designated time, whereby the telerecording operation can be done.

In this type of system, the timer-based restoration to the ON-status is effected in such a way that startup time is set in an RTC (Real Time Clock), and the RTC notifies a power source control unit and a system controller of a device startup signal at designated time.

Further, the PC in the recent years is installed with an OS for executing a normal user operation and an OS for supporting an independent function separately from this OS, wherein the startup OS is switched over depending on a difference in the startup operation. For instance, in the case of effecting the startup by use of a normal startup button, the first OS for utilizing the system as the normal personal computer is started up, and the second OS for actualizing a TV function is started up in the case of pressing the TV button. Thus, operability can be improved and the startup time can be reduced by providing the OS specialized in the dedicated function.

Further, as the prior arts related to the invention of the application, there are technologies disclosed in, for example, the following Patent documents 1 through 7.
[Patent document 1] Japanese Patent Application Laid-Open Publication No.2001-256067
[Patent document 2] Japanese Patent Application Laid-Open Publication No.2001-256066
[Patent document 3] Japanese Patent Application Laid-Open Publication No.2000-076087
[Patent document 4] Japanese Patent Application Laid-Open Publication No.03-024631
[Patent document 5] Japanese Patent Application Laid-Open Publication No.2000-235503
[Patent document 6] Japanese Patent Application Laid-Open Publication No.11-149385
[Patent document 7] Japanese Patent Application Laid-Open Publication No.10-133910

### SUMMARY OF THE INVENTION

As described above, in the PC that exclusively starts up the plurality of OSs, even when the first OS sets the startup time in the RTC, at a point of time when starting up the second OS, this second OS controls the RTC and clears the setting, and consequently the setting by the first OS is not reflected. Hence, even when the telerecording reservation is made by the first OS, if the second OS is started up before the reserved time, there arises a problem that the first OS is unable to perform the telerecording operation.

Moreover, for solving this problem, there is also considered a configuration that a plurality of RTCs are provided so that the plurality of OSs do not share the single RTC but do setting separately. This configuration, however, requires changing not only the RTC but also all programs such as an OS for controlling the RTC and BIOS, and is not therefore realistic.

Further, the technologies disclosed in the Patent documents 1 through 4 have a scheme of operating the plurality of OSs in parallel but do not reflect the startup time set by the OS after the stop of the OS by selectively operating any one of the OSs as described above.

Such being the case, the invention provides, in an information processing device capable of exclusively operating a plurality of OSs, even in the case of switchover to the other OS after the OS has set operating time, a technology that attains easy actualization of starting up the OS at this operating time.

The invention adopts the following configurations in order to solve the problems.
Namely, an information processing device of the invention is an information processing device exclusively operating a plurality of operating systems, comprising:
a startup timer unit stored with operating time set by the operating system and causing the operating system to transit from a stopping status to an operating status at the operating time;
a storage module reading and storing the operating time before an operation of the operating system other than the operating system that has set the operating time; and
a rewriting module writing, after storing the operating time, the operating time stored on the storage module before the operation of the operating system that has set the operating time, back to the startup timer unit.

Further, an information processing device of the invention is an information processing device exclusively operating a first operating system and a second operating system, comprising:
a startup timer unit stored with operating time set by the first operating system or the second operating system and causing the first operating system to transit from a stopping status to an operating status at the operating time;
a storage module reading and storing the operating time before an operation of the second operating system; and
a rewriting module writing, after storing the operating time, the stored operating time before the operation of the first operating system, back to the startup timer unit.

The information processing device may further comprise:
a stop detection module detecting a stop of the first operating system and a stop of the second operating system,
wherein the storage module may store the operating time when the first operating system stops, and
the rewriting module may write the stored operating time back to the startup timer unit when the second operating system stops.

The stop of the operating system may be termination or a halt of the operating system.

The storage module may store the operating time on a nonvolatile memory.

The information processing device may further comprise:
a selection unit selectively operating the first operating system or the second operating system through a user's operation, wherein the storage module and the rewriting module may execute the processing in accordance with distinction as to which operating system, the first operating system or the second operating system, is operated by the selection unit.

The startup timer unit, during the operation of the second operating system, may refer to the stored operating time, and, when the present time reaches the operating time, stop the second operating system but operates the first operating system.

A switchover method of the invention is an operating system switchover method executed by an information processing device including a startup timer unit stored with operating time set by any one of a plurality of operating systems and causing the operating system to transit from a stopping status to an operating status at the operating time, the method comprising:
a step of reading and storing the operating time before an operation of the operating system other than the operating system that has set the operating time; and
a step of writing, after storing the operating time, the operating time stored on the storage module before the operation of the operating system that has designated the operating time, back to the startup timer unit.

Moreover, a switchover method of the invention is an operating system switchover method executed by an information processing device including a startup timer unit stored with operating time set by a first operating system or a second operating system and causing the first operating system to transit from a stopping status to an operating status at the operating time, the method comprising:
a step of reading and storing the operating time before an operation of the second operating system; and
a step of writing, after storing the operating time, the stored operating time before the operation of the first operating system, back to the startup timer unit.

The switchover method may further comprise:
a step of detecting a stop of the first operating system and a stop of the second operating system,
wherein the operating time is stored when the first operating system stops, and
the stored operating time is written back to the startup timer unit when the second operating system stops.

The stop of the operating system may be a process of terminating or halting the operating system.

The operating time storing step may involve storing the operating time on a nonvolatile memory.

The switchover method may further comprise:
a step of selectively operating the first operating system or the second operating system through a user's operation,
wherein the storing and the rewriting may be executed in accordance with distinction as to which operating system, the first operating system or the second operating system, is operated through the user' s operation.

In the switchover method, during the operation of the second operating system, the stored operating time maybe referred to, and, when the present time reaches the operating time, the second operating system may be stopped, but the first operating system may be operated.
Further, the invention may also be a program for making the information processing device (computer) execute the switchover method. The invention may further be a readable-by-computer recording medium recorded with this program. The computer is made to read and execute the program on this recording medium, whereby the function thereof can be provided.

Herein, the recordingmedium readable by the computer connotes a recording medium capable of storing information such as data and programs electrically, magnetically, optically, mechanically or by chemical action, which can be read from the computer. Among these recording mediums, for example, a flexible disc, a magneto-optic disc, a CD-ROM, a CD-R/W, a DVD, a DAT, an 8 mm tape, a memory card, etc. are given as those demountable from the computer.

Further, a hard disc, a ROM (Read-Only Memory), etc. are given as the recording mediums fixed within the computer.

Moreover, the termination of the OS may also be set such as switching OFF the power source after completely finishing (shutdown) the processing of the OS, and the halt of the OS may also be set such as switching OFF the power source after recording the OS status before the halt in a way that makes the before-the-halt status reproducible when restored next time.

Still further, the transition from the stopping status to the operating status represents the startup of the information processing device from the finished state, the restoration from the halt status, etc., and will hereinafter be simply referred to as the startup.
Yet further, the first OS and the second OS are not limited to the two OSs, and there may be a plurality of second OSs.

The invention can provide, in an information processing device capable of exclusively operating a plurality of OSs, even in the case of switchover to the other OS after the OS has set operating time, a technology that attains easy actualization of starting up the OS at this operating time.

### BRIEF DESCRIPTION OF THE DRAWINGS

FIG.1 is a schematic diagramof a configuration of an information processing device of the invention.
FIG.2 is a flowchart of a startup/finishing process of a first OS.
FIG.3 is a flowchart of the startup/finishing process by an RTC.
FIG.4 is a flowchart in the case of starting up and finishing a second OS before startup time.
FIG.5 is a flowchart in the case of reaching the startup time during an operation of the second OS.

### DETAILED DESCRIPTION OF THE PREFERRED EMBODIMENT

A best mode for carrying out the invention will hereinafter be described with reference to the drawings. A configuration of the following embodiment is an exemplification, and the invention is not limited to the configuration of the invention.

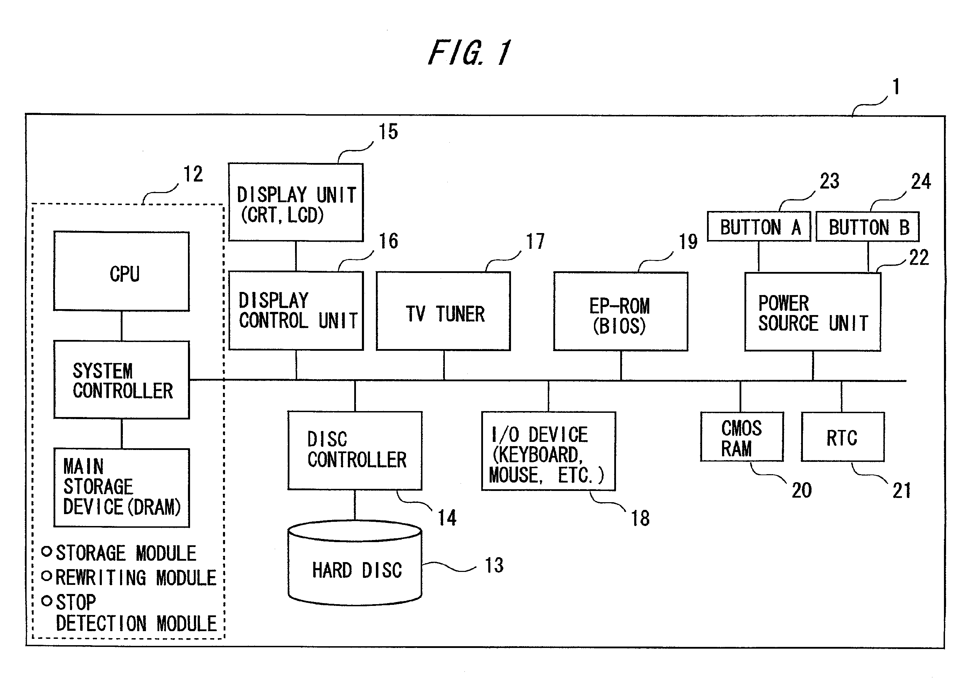

FIG. 1 is a schematic diagramof a configuration of an information processing device 1 of the invention. As shown in FIG. 1, the information processing device 1 in the example includes an arithmetic processing unit 12, a storage unit (hard disc) 13, a disc controller 14, a display unit 15, a display control unit 16, a TV tuner 17, an I/O device 18, an EP-ROM (Erasable Programmable Read-Only Memory) 19, a CMOS RAM (Complementary Metal-Oxide Semiconductor Random Access Memory) 20, a RTC (Real Time clock) 21, a power source unit 22 and a TV startup button 24.

The hard disc 13 is preinstalled with software components such as a first operating system (OS), a second operating system (OS) and an application program. The disc controller 14 controls a data input to the hard disc 13 and a data output from the hard disc 13.

The TV tuner 17, under the control of the arithmetic processing unit 12, receives TV signals and outputs the signals as dynamic image signals and voice signals in predetermined formats to the display unit 15, a loudspeaker and the hard disc.
The display control unit 16 controls the display unit 15 to display the display information given from the arithmetic processing unit 12 and from the TV tuner 17.

Devices such as a keyboard, a mouse and a loudspeaker each serving as the I/O device 18 are properly connected.
The EP-ROM 19 is stored with a program classified as BIOS (Basic Input/Output System). The BIOS has a program for executing an OS switchover method of the invention. The CMOS RAM 20 is stored with setting information related to the BIOS. The CMOS RAM 20 has a backup power source and can therefore retain the storage information during even a stop of the device, i.e. , even in an power-OFF state of the power source unit 22. In addition, arbitrary nonvolatile memories such as FLASH ROM other than the CMOS may also be available.

The RTC (startup timer unit) 21 is stored with startup time (operating time) set by the operating system, and notifies the power source unit 22 and the system controller of the startup at the startup time, whereby a startup process of the information processing device 1 is executed. In the example, when started up by the RTC 21, the setting is that the first OS is started up. Namely, the RTC 21 causes transition of the first OS from a stopping status to an operating status at the startup time.

The power source unit 22 starts supplying electric power to the respective units upon the notifications given from the RTC 21 and the startup buttons 23, 24, and stops supplying the electric power upon notifications given from the RTC 21 and the startup buttons 23, 24.
The PC startup button 23 is pressed in such a case that a user utilizes the system as the first OS, i.e., as a normal personal computer in the example. The startup button 23, when pressed by the user, notifies the power source unit 22 and the arithmetic processing unit 12 of the startup. Further, the TV startup button 24 is pressed in such a case that the user utilizes the system as the second OS, i.e. , as a television in the example. The startup button 24, when pressed by the user, notifies the power source unit 22 and the arithmetic processing unit 12 of the startup. Accordingly, the startup buttons 23, 24 function as selection units selected by the user in accordance with the want-to-start-up OS.

The arithmetic processing unit 12 is constructed of a CPU, a system controller, a main storage device (DRAM), etc., and, when notified of the startup, reads the BIOS from the EP-ROM 19 and executes the BIOS, thereby executing the startup process such as POST (Power On Self Test), initialization of the device and the startup of the OS. Further, the arithmetic processing unit 12, when instructed to stop, effects power-OFF of the power source unit 22 by executing a finishing process. Herein, the arithmetic processing unit 12 functions as a storage module, a rewriting module and a stop detection module according to the invention. Moreover, the arithmetic processing unit 12 properly reads the OS and the application program from the hard disc 13 and executes the OS and the application program, thereby executing an arithmetic process with respect to the information inputted from the I/O device 18 and the information read from the hard disc 13.

The storage module, before the second operating system is started up, reads the startup time from the RTC 21 and temporarily stores the startup time on the CMOS RAM 20. Note that this temporary storage may be done before starting up the second OS but is done when stopping the first OS in the embodiment.

The rewriting module, after temporarily storing the operating time, reads the temporarily-stored startup time from the CMOS RAM 20 before starting up the first OS, and writes the startup time back to the RTC 21. It should be noted that a timing of rewriting the startup time may be set before the startup of the fist OS but is set when stopping the second OS in the embodiment.

The stop detection module recognizes which OS is started up by knowing which component, the startup button 23 or the startup button 24 or the RTC 21, the startup notification is given from, and stores this (event-driven type), thereby making it possible to detect which OS finishes when notified of the OS termination.

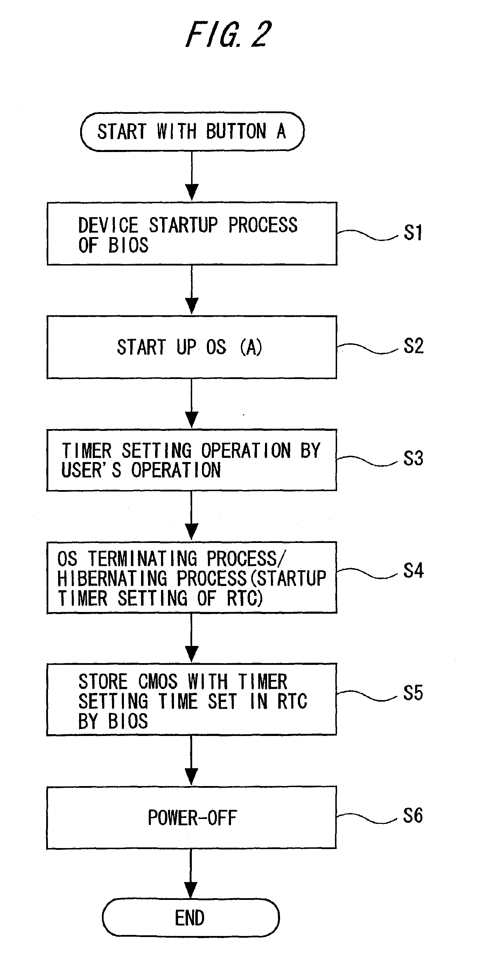

An OS switchover method by the thus-constructed information processing device will be explained with reference to FIGS. 2 through 5.
FIG. 2 is a flowchart of processing, wherein the device 1 is started up by (pressing) the startup button 23, and the finishing process is executed after the user has set a timer on the first OS.
When the user presses the startup button 23, the arithmetic processing unit 12 executes the BIOS and starts the startup process (step 1, which will hereinafter be abbreviated such as S1).

The BIOS reads the first OS corresponding to the startup button 23 from the hard disc 13 and starts up the first OS, and recognizes that the first OS is in the process of being started up and stores the memory or the CMOS RAM 20 with this (S2) . Moreover, the started-up first OS executes the startup process and initializes the setting of the RTC 21 during this startup process.

When the user sets a timer operation such as a telerecording reservation after the startup of the first OS, the first OS stores this piece of setting information (S3). Then, when the user gives an instruction to finish the first OS, the first OS sets the startup time for performing the timer operation in the RTC 21 in the finishing process (S4).

At the end of the finishing process of the first OS, the BIOS is invoked, then detects that the OS to be finished is the first OS, temporarily stores the CMOS RAM 20 with the startup time set in the RTC 21 (S5), and switches OFF the power source unit 22 (S6).

Herein, in the case of setting the first OS in a hibernating status instead of finishing the first OS, a hibernating process as a substitute for the finishing process is executed in step 4, and the startup time for performing the timer operation is set in the RTC 21 in this hibernating process.

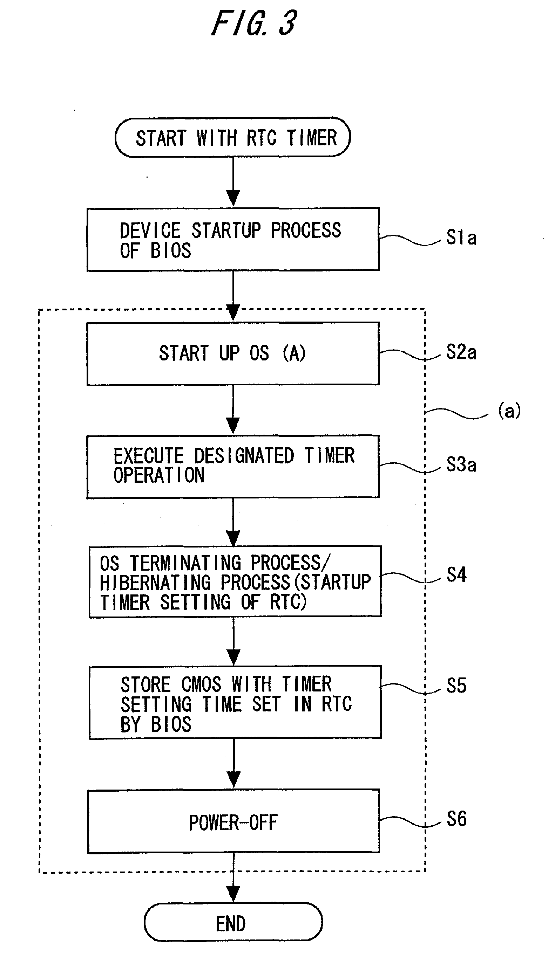

FIG. 3 is a flowchart showing an operation in a case where the set timer operating time is reached in the power-OFF state of the power source after the first OS has set the timer operation according to the operation in FIG. 2.

The RTC 21 compares the present time with the startup time during even the stopping status, then, when reaching the operating time, notifies the power source unit 22 and the arithmetic processing unit 12 of the startup, and instructs the arithmetic processing unit 12 to start the startup process. In response to this operation, the arithmetic processing unit 12 starts the startup process by executing the BIOS (S1a).

The BIOS, corresponding to the startup by the RTC 21, reads the first OS from the hard disc 13, then starts up the first OS, recognizes that the first OS is in the process of being started up, and stores the memory or the CMOS RAM 20 with this (S2a). Further, the started-up first OS executes the startup process and initializes the setting of the RTC 21 during this startup process.

After the startup, the first OS executes a predetermined timer operation (S3a), and, after the timer operation, executes the stopping process such as the OS finishing process (S4) . Herein, if next timer operation setting is conducted, the first OS sets the startup time for performing the timer operation in the RTC 21 in the finishing process. Hereafter, similarly the startup time is temporarily stored on the CMOS RAM 20 (S5), and the power source is switched OFF (S6).

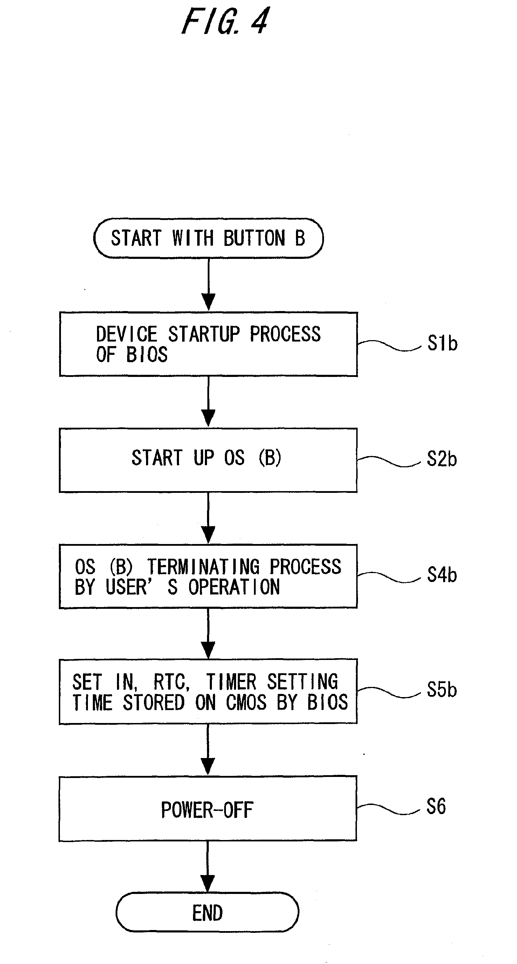

FIG. 4 is a flowchart showing an operation in such a case that the second OS is started up by the user's pressing the button B before reaching the startup time after the timer has been set by the operation in FIG. 2, and is finished by the user' s operation before reaching the startup time.

When the user presses the startup button 24, the arithmeticprocessingunit 12 executes the BIOS and starts the startup process (S1b).

The BIOS reads the second OS corresponding to the startup button 24 from the hard disc 13 and starts up the second OS, and recognizes that the second OS is in the process of being started up and stores the memory or the CMOS RAM 20 with this (S2b) . Further, the started-up second OS executes the startup process and initializes the setting of the RTC 21 during this startup process.

The second OS is started up, and, when the user gives an instruction to finish the second OS after viewing etc. of a TV program, the second OS executes the finishing process (S4b). At the end of the finishing process of the second OS, the BIOS is invoked, then detects that the OS to be finished is the second OS, writes the startup time temporarily stored on the CMOS RAM 20 back to the RTC 21 (S5b), and thereafter switches OFF the power source unit 22 (S6).

With this operation, the startup time set by the first OS is set again in the RTC 21, and hence, when reaching the startup time, the timer operation of the first OS shown in FIG. 3 is enabled.

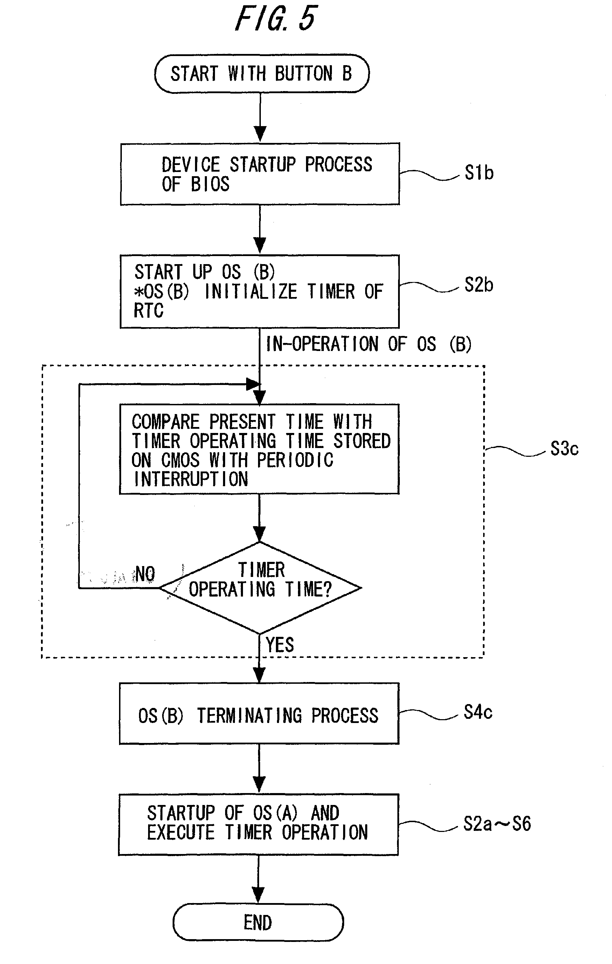

FIG. 5 is a flowchart showing an operation in such a case that the second OS is started up by pressing the button B after setting the timer by the operation in FIG. 2, and the timer operating time is reached during the startup of the second OS.

When the user presses the startup button 24, the arithmetic processing unit 12 starts the startup process by executing the BIOS (S1b).
The BIOS reads the second OS corresponding to the startup button 24 from the hard disc 13 and starts up the second OS, and recognizes that the second OS is in the process of being started up and stores the memory or the CMOS RAM 20 with this (S2b). Moreover, the started-up second OS executes the startup process and initializes the setting of the RTC 21 during this startup process.

When the second OS is started up and when the TV program is viewed and so on, the BIOS compares the present time with the startup time temporarily stored on the CMOS RAM 20 through a periodic SMI (System Management Interrupt) process (S3c). The interrupt conducted herein may be arbitrary interrupt other than the SMI, if capable of periodically executing the time monitoring operation of the BIOS.

The BIOS, upon detecting that the startup time is reached, requests the second OS to be finished, thus finishing the second OS (S4c). At the end of the finishing process of the second OS, the BIOS is invoked and starts up the first OS. The first OS, after being started up, executes the predetermined timer operation set beforehand in the first OS in the process in FIG. 2. Then, the processes from this onward are the same as the control (S2a - S6) defined by a broken line (a) depicted in FIG. 3.

Thus, according to the *embodiment*, the device capable of exclusively starting up the plurality of OSs obviates the problem that the timer operation such as TV telerecording set by the user on one OS is restrained by the operation of the other OS with the result that the user is unable to perform the be-going-to-do telerecording operation, and can surely execute the timer operation expected (desired) by the user. Further, there is no necessity for any changes in the RTC and the OS, and therefore the timer operation can be easily actualized.

### <Others>

The invention is not limited to only the illustrated examples given above and can be, as a matter of course, changed in a variety of forms in the range that does not deviate from the gist of the invention.

## Claims

1. An information processing device exclusively operating a plurality of operating systems, comprising:
a startup timer unit stored with operating time set by the operating system and causing the operating system to transit from a stopping status to an operating status at the operating time;
a storage module reading and storing the operating time before an operation of the operating system other than the operating system that has set the operating time; and
a rewriting module writing, after storing the operating time, the operating time stored on the storage module before the operation of the operating system that has set the operating time, back to the startup timer unit.

2. An information processing device exclusively operating a first operating system and a second operating system, comprising:
a startup timer unit stored with operating time set by the first operating system or the second operating system and causing the first operating system to transit from a stopping status to an operating status at the operating time;
a storage module reading and storing the operating time before an operation of the second operating system; and
a rewriting module writing, after storing the operating time, the stored operating time before the operation of the first operating system, back to the startup timer unit.

3. An information processing device according to Claim 2, further comprising:
a stop detection module detecting a stop of the first operating system and a stop of the second operating system,
wherein the storage module stores the operating time when the first operating system stops, and
the rewriting module writes the stored operating time back to the startup timer unit when the second operating system stops.

4. An information processing device according to Claim 3, wherein the stop of the operating system is termination or a halt of the operating system.

5. An information processing device according to any of the preceding claims, wherein the storage module stores the operating time on a nonvolatile memory.

6. An information processing device according to Claim 2, or any claim dependent thereon further comprising:
a selection unit selectively operating the first operating system or the second operating system through a user' s operation,
wherein the storage module and the rewriting module execute the processing in accordance with distinction as to which operating system, the first operating system or the second operating system, is operated by the selection unit.

7. An information processing device according to Claim 2, or any claim dependent thereon wherein the startup timer unit, during the operation of the second operating system, refers to the stored operating time, and, when the present time reaches the operating time, stops the second operating system but operates the first operating system.

8. An operating system switchover method executed by an information processing device including a startup timer unit stored with operating time set by any one of a plurality of operating systems and causing the operating system to transit from a stopping status to an operating status at the operating time, the method comprising:
a step of reading and storing the operating time before an operation of the operating system other than the operating system that has set the operating time; and
a step of writing, after storing the operating time, the operating time stored on the storage module before the operation of the operating system that has designated the operating time, back to the startup timer unit.

9. An operating system switchover method executed by an information processing device including a startup timer unit stored with operating time set by a first operating system or a second operating system and causing the first operating system to transit from a stopping status to an operating status at the operating time, the method comprising:
a step of reading and storing the operating time before an operation of the second operating system; and
a step of writing, after storing the operating time, the stored operating time before the operation of the first operating system, back to the startup timer unit.

10. An operating system switchover method according to Claim 9, further comprising:
a step of detecting a stop of the first operating system and a stop of the second operating system,
wherein the operating time is stored when the first operating system stops, and
the stored operating time is written back to the startup timer unit when the second operating system stops.

11. An operating system switchover method according to Claim 9, wherein the stop of the operating system is a process of terminating or halting the operating system.

12. An operating system switchover method according to any of Claims 8 to 11, wherein the operating time storing step involves storing the operating time on a nonvolatile memory.

13. An operating system switchover method according to Claim 9, or any claim dependent thereon further comprising:
a step of selectively operating the first operating system or the second operating system through a user's operation,
wherein the storing and the rewriting are executed in accordance with distinction as to which operating system, the first operating system or the second operating system, is operated through the user' s operation.

14. An operating system switchover method according to Claim 9, or any claim dependent thereon wherein during the operation of the second operating system, the stored operating time is referred to, and, when the present time reaches the operating time, the second operating system is stopped, but the first operating system is operated.

15. A program executed by an information processing device including a startup timer unit stored with operating time set by any one of a plurality of operating systems and causing the operating system to transit from a stopping status to an operating status at the operating time, the program comprising software means to provide:
a step of reading and storing the operating time before an operation of the operating system other than the operating system that has set the operating time; and
a step of writing, after storing the operating time, the operating time stored on the storage module before the operation of the operating system that has designated the operating time, back to the startup timer unit.

16. A program executed by an information processing device including a startup timer unit stored with operating time set by a first operating system or a second operating system and causing the first operating system to transit from a stopping status to an operating status at the operating time, the program comprising software means to provide:
a step of reading and storing the operating time before an operation of the second operating system; and
a step of writing, after storing the operating time, the stored operating time before the operation of the first operating system, back to the startup timer unit.

17. A program according to Claim 15 or 16, further comprising:
software means to provide any of the method steps of claims 11 to 14.
